# EUROPÄISCHE PATENTSCHRIFT

(11) **EP 2 836 388 B1**
(45) Veröffentlichungstag und Bekanntmachung des Hinweises auf die Patenterteilung: **08.08.2018**
(21) Anmeldenummer: 13720283.4
(22) Anmeldetag: 15.04.2013
(51) Int. Cl.: B60L 5/20, B60L 5/22

(54) **KONTAKTVORRICHTUNG FÜR SCHIENENFAHRZEUGE**
CONTACT DEVICE FOR RAIL VEHICLES
DISPOSITIF DE CONTACT POUR VÉHICULES SUR RAILS

(30) Priorität: 13.04.2012 DE 102012007315
(43) Veröffentlichungstag der Anmeldung: 18.02.2015
(73) Patentinhaber: Schunk Bahn- und Industrietechnik GmbH, 5101 Bergheim (AT)
(72) Erfinder: PACHLER, Alexander, A-5020 Salzburg (AT)
(74) Vertreter: advotec.
(86) Internationale Anmeldenummer: PCT/EP2013/057827
(87) Internationale Veröffentlichungsnummer: WO 2013/153230

(56) Entgegenhaltungen:
- EP-A1- 0 000 980
- DE-A1- 3 536 843
- DE-C- 814 749
- JP-A- S56 129 502

## Beschreibung

Die vorliegende Erfindung betrifft eine Kontaktvorrichtung für einen Stromabnehmer für Schienenfahrzeuge, wobei die Kontaktvorrichtung zumindest ein erstes Kohleschleifstück aufweist, das zur Anlage gegen eine Fahrleitung auf einem gegen die Fahrleitung verfahrbaren Schleifstückgestell angeordnet ist. Des Weiteren betrifft die Erfindung einen mit einer derartigen Kontaktvorrichtung versehenen Stromabnehmer.

Aus der DE 35 36 843 A1 ist eine Kontaktvorrichtung für einen Stromabnehmer für Schienenfahrzeuge bekannt, wobei die Kontaktvorrichtung zumindest ein erstes Kohleschleifstück aufweist, das zur Anlage gegen eine Fahrleitung auf einem gegen die Fahrleitung verfahrbaren Schleifstückgestell angeordnet ist.

Kohleschleifstücke, wie sie konventionell zur Kontaktierung der Fahrleitung eingesetzt werden, zeichnen sich dadurch aus, dass sie zum einen aufgrund der guten elektrischen Leitfähigkeit des Kohleschleifstücks bzw. des für das Kohleschleifstück verwendeten Kohlenstoffmaterials eine sichere Kontaktierung mit der Fahrleitung ermöglichen und darüber hinaus aufgrund der Festschmierstoff-Eigenschaften des Kohleschleifstücks für eine gute Anschmiegung im Kontaktbereich zur Fahrleitung sorgen und nur wenig abrasiv auf die Fahrleitung einwirken, wodurch sich ein besonders verschleißarmer Kontakt zur Fahrleitung ergibt.

Nachteilig an den bekannten Kohleschleifstücken ist jedoch, dass sie insbesondere bei hohen Strömen entweder im Fahrbetrieb oder im Stillstand, also insbesondere dann, wenn der Stromabnehmer in Ladestationen als stationärer Stromleiter verwendet wird, eine vergleichsweise reduzierte Stromleitfähigkeit aufweisen. Daher ist man teilweise dazu übergegangen, Hybridlösungen für das Schleifstück zu verwenden, bei denen insbesondere sogenannte "Kasparowski-Schleifstücke" oder hochleitfähige Schleifstücke mit Kupfereinsätzen in der Kohle verwendet werden. Hierbei besteht die Gefahr, dass Kohle und Kupfer ungleichmäßig verschleißen und somit sich nur unzureichende Kontaktflächen zwischen der Fahrleitung und dem Schleifstück ausbilden und die Fahrleitung sich aufgrund des Kontakts zu den Kupfereinsätzen stark erwärmen oder sogar beschädigt werden kann.

Der Erfindung liegt daher die Aufgabe zugrunde, eine Kontaktvorrichtung für einen Stromabnehmer bzw. einen Stromabnehmer mit einer Kontaktvorrichtung vorzuschlagen, die einen verschleißarmen und dennoch betriebssicheren Kontakt zwischen der Fahrleitung und dem hochleitfähigen Schleifstück ermöglicht.

Diese Aufgabe wird durch eine Kontaktvorrichtung mit den Merkmalen des Anspruchs 1 sowie einen Stromabnehmer mit den Merkmalen des Anspruchs 11 gelöst.

Erfindungsgemäß weist die Kontaktvorrichtung zumindest ein erstes Kohleschleifstück auf, das zur Anlage gegen eine Fahrleitung auf einem gegen die Fahrleitung verfahrbaren Schleifstückgestell angeordnet ist, wobei das erste Kohleschleifstück zusammen mit einem zweiten Schleifstück auf einem gelenkig mit dem Schleifstückgestell verbundenen Schleifstückträger angeordnet ist, der als Hebelwippe ausgebildet ist und um eine Schwenkachse quer zur Längsrichtung der Fahrleitung gegenüber dem Schleifstückgestell verschwenkbar ist, derart, dass das erste Kohleschleifstück und das zweite Schleifstück, die auf einander gegenüberliegenden Seiten der Schwenkachse angeordnet sind, in einer Betriebskonfiguration des Stromabnehmers gleichzeitig und beabstandet von einander in Kontakt mit der Fahrleitung sind.

Die erfindungsgemäße Zuordnung eines zweiten Schleifstücks zu dem Kohleschleifstück, die beide gleichzeitig in Anlage mit der Fahrleitung gebracht werden, ermöglicht es, gleichzeitig die positiven Verschleiß mindernden Eigenschaften des Kohleschleifstücks kombiniert mit den guten elektrisch leitenden Eigenschaften des zweiten Schleifstücks, das beispielsweise als Kupfer-Schleifstück ausgeführt sein kann, zu nutzen. Die gleichzeitige Anordnung des ersten Kohleschleifstücks und des zweiten Schleifstücks gegen die Fahrleitung mittels des als Hebelwippe ausgebildeten Schleifstückträgers ermöglicht im Fahrbetrieb einerseits eine ausreichende Schmierung über das erste Kohleschleifstück und andererseits über das zweite Schleifstück einen betriebssicheren elektrischen Kontakt zwischen dem elektrisch besonders gut leitenden zweiten Schleifstück, das insbesondere aus Kupfer ausgeführt sein kann, unter zwischenliegender Anordnung eines den Verschleiß mindernden Feststoffschmierfilms auf der Fahrleitung. Vorzugsweise ist die Hebelwippe so ausgebildet, dass das erste Kohleschleifstück und das zweite Schleifstück mit gleicher Kontaktkraft gegen die Fahrleitung anliegen.

Bei dem vorstehend als erstes Kohleschleifstück bezeichneten Schleifstück handelt es sich um ein konventionell zur Kontaktierung von Fahrleitungen eingesetztes Schleifstück, das aus einem Kohlenstoffmaterial mit vorzugsweise hohem Graphitanteil besteht und darüber hinaus noch weitere Anteile besitzen kann. Im Gegensatz zu dem ersten Kohleschleifstück, bei dem die Erzielung eines Verschleiß an der Fahrleitung mindernden Effekts eine wesentliche Rolle spielt, kommt es hierauf bei dem "zweiten Schleifstück" nicht an. Das "zweite Schleifstück" kann daher vorteilhaft zur Erfüllung einer abweichenden Funktion optimiert werden, beispielsweise kann es besonders witterungs- oder alterungsbeständig beschaffen sein ohne Rücksicht auf eine möglicherweise schlechte Schmierwirkung.

Besonders vorteilhaft ist es, wenn das zweite Schleifstück gegenüber dem ersten Kohleschleifstück eine höhere elektrische Leitfähigkeit aufweist, die vorzugsweise über einen Metallanteil bzw. einen gegebenenfalls vergleichsweise höheren Metallanteil erreicht wird.

Vorzugsweise ist das zweite Schleifstück als Kupferschleifstück ausgeführt ist, so dass zusätzlich zur hohen Leitfähigkeit eine hohe Alterungsbeständigkeit erzielt wird.

Wenn das Schleifstückgestell mit einem zweiten Kohleschleifstück versehen ist, derart, dass das zweite Schleifstück in Längsrichtung der Fahrleitung zwischen dem ersten und dem zweiten Kohleschleifstück angeordnet ist, ergibt sich der vorteilhafte, vorstehend beschriebene verschleißmindernde Schmierstoffeffekt unabhängig von der Fahrtrichtung, in der das mit dem Stromabnehmer versehene Schienenfahrzeug betrieben wird.

Um den elektrisch leitenden Kontakt des zweiten, insbesondere aus Kupfer ausgeführten Schleifstücks noch weiter zu verbessern, ist es möglich, zwischen dem zweiten Schleifstück und dem Schleifstückträger eine Federeinrichtung vorzusehen.

Um gegebenenfalls den Verschleiß an der Fahrleitung beeinflussen zu können, kann das zweite Schleifstück mit einer Kontaktkrafteinstelleinrichtung versehen sein.

Vorzugsweise weist die Kontaktkrafteinstelleinrichtung eine fahrgeschwindigkeitsabhängige Betätigungseinrichtung auf, die als eine aerodynamische Auftriebseinrichtung ausgebildet sein kann, beispielsweise derart, dass durch einen Spoiler bei Erreichen einer bestimmten Fahrgeschwindigkeit eine Abtriebskraft, also ein negativer Auftrieb, erzeugt wird, die die Kontaktkraft reduziert oder gar aufhebt, so dass ab dieser Geschwindigkeit kein Kontakt mehr zwischen dem zweiten Schleifstück und der Fahrleitung besteht.

Ebenso können auch mechanische, also etwa fahrtrichtungs- oder reibungsabhängig reagierende Vorrichtungen, die die Kontaktkraft, mit der das zweite Schleifstück gegen die Fahrleitung anliegt, aufheben oder reduzieren zur Minimierung des Verschleißes an der Fahrleitung beitragen.

Vorteilhaft ist es auch, wenn das gemeinsam mit dem zweiten Schleifstück auf dem Schleifstückträger angeordnete erste Kohleschleifstück und das zweite Kohleschleifstück auf einem gegenüber einem unteren Gestellteil des Stromabnehmers mittels einer Federeinrichtung abgestützten oberen Gestellteil des Stromabnehmers angeordnet sind, wobei das untere Gestellteil mittels einer Schwenkachse an eine höhenverstellbare Gestellbasis des Stromabnehmers angeschlossen ist.

Eine besonders vorteilhafte Montage wird möglich, wenn das zweite Schleifstück und das erste und das zweite Kohleschleifstück an eine in der Schwenkachse an der Gestellbasis ausgebildete zentrale Stromführungseinrichtung angeschlossen sind.

Der erfindungsgemäße Stromabnehmer weist eine Kontaktvorrichtung auf, die zumindest ein erstes Kohleschleifstück aufweist, das zur Anlage gegen eine Fahrleitung auf einem gegen die Fahrleitung verfahrbaren Schleifstückgestell angeordnet ist, wobei das erste Kohleschleifstück zusammen mit einem zweiten Schleifstück auf einem gelenkig mit dem Schleifstückgestell verbundenen Schleifstückträger angeordnet ist, der als Hebelwippe ausgebildet ist und um eine Schwenkachse quer zur Längsrichtung der Fahrleitung gegenüber dem Schleifstückgestell verschwenkbar ist, derart, dass das erste Kohleschleifstück und das zweite Schleifstück, die auf einander gegenüberliegenden Seiten der Schwenkachse angeordnet sind, in einer Betriebskonfiguration des Stromabnehmers gleichzeitig und beabstandet von einander in Kontakt mit der Fahrleitung sind.

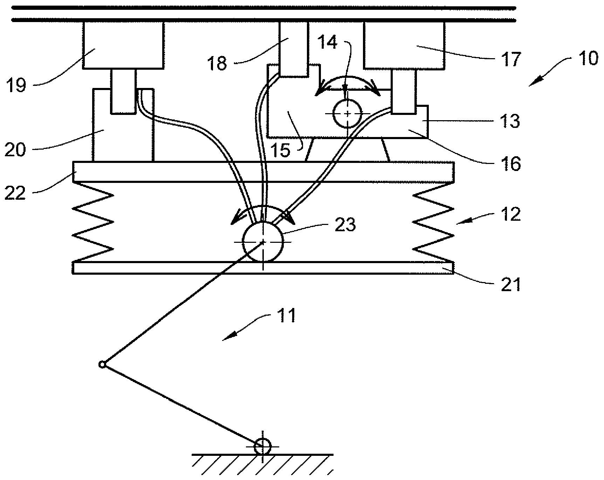

Nachfolgend wird eine bevorzugte Ausführungsform des Stromabnehmers anhand der Zeichnung näher erläutert:
Der beispielhaft in der Zeichnung dargestellte, als Pantograf ausgebildete Stromabnehmer weist eine Kontaktvorrichtung 10 auf, die in der beispielhaft dargestellten Ausführungsform mit einem Schleifstückgestell 12 versehen ist, das mittels einer Schwenkachse 23 drehgelenkig mit einer Gestellbasis 11 verbunden ist, an dem mittels einer Schwenkachse 14 drehgelenkig ein Schleifstückträger 13 angeschlossen ist.

Der Schleifstückträger 13 ist als Hebelwippe ausgebildet, mit zwei Schleifstückhebeln 15 und 16, an deren Ende ein erstes Kohleschleifstück 17 bzw. ein Kupferschleifstück 18 (zweites Schleifstück) angeordnet sind.

Weiterhin befindet sich an dem Schleifstückgestell 12 ein zweites Kohleschleifstück 19, das über einen starr an dem Schleifstückgestell 12 angeordneten zweiten Schleifstückträger 20 mit dem Schleifstückgestell 12 verbunden ist.

Wie aus der Zeichnung hervorgeht, ist im vorliegenden Fall die Anordnung des Kupferschleifstücks 18 so gewählt, dass sich dieses zwischen dem ersten Kohleschleifstück 17 und dem zweiten Kohleschleifstück 19 befindet. Darüber hinaus bewirkt die Anordnung des Kupferschleifstücks 18 und des ersten Kohleschleifstücks 17 auf dem als Hebelwippe ausgebildeten Schleifstückträger 13, dass unabhängig von der Schwenkstellung des Schleifstückgestells 12 das erste Kohleschleifstück 17 und das Kupferschleifstück 18 stets mit derselben Kontaktkraft gegen die Fahrleitung anliegen. Weiterhin ergibt sich aus der in der Zeichnung dargestellten Ausgestaltung des Schleifstückgestells 12 mit zwei gegeneinander abgefederten Gestellteilen 21 und 22, dass auch das zweite Kohleschleifstück 19 mit derselben Kontaktkraft gegen die Fahrleitung anliegt wie das erste Kohleschleifstück 17 und das Kupferschleifstück 18.

Zur elektrisch leitenden Verbindung des ersten Kohleschleifstücks 17 und des zweiten Kohleschleifstücks 19 sowie des Kupferschleifstücks 18 mit der Gestellbasis 11 des Stromabnehmers sind das Kupferschleifstück 18 und das erste Kohleschleifstück 17 und das zweite Kohleschleifstück 19 über Litzen mit einer in einer Schwenkachse 23 an der Gestellbasis 11 ausgebildeten zentralen Stromführungseinrichtung verbunden.

## Patentansprüche

1. Kontaktvorrichtung für einen Stromabnehmer für Schienenfahrzeuge, wobei die Kontaktvorrichtung zumindest ein erstes Kohleschleifstück (17) aufweist, das zur Anlage gegen eine Fahrleitung auf einem gegen die Fahrleitung verfahrbaren Schleifstückgestell (12) angeordnet ist,
**dadurch gekennzeichnet,**
**dass** das erste Kohleschleifstück (17) zusammen mit einem zweiten Schleifstück (18) auf einem gelenkig mit dem Schleifstückgestell verbundenen Schleifstückträger (13) angeordnet ist, der als Hebelwippe ausgebildet ist und um eine Schwenkachse (14) quer zur Längsrichtung der Fahrleitung gegenüber dem Schleifstückgestell verschwenkbar ist, derart, dass das erste Kohleschleifstück (17) und das zweite Schleifstück (18), die auf einander gegenüberliegenden Seiten der Schwenkachse angeordnet sind, in einer Betriebskonfiguration des Stromabnehmers gleichzeitig und beabstandet von einander in Kontakt mit der Fahrleitung sind.

2. Kontaktvorrichtung nach Anspruch 1,
**dadurch gekennzeichnet,**
**dass** das zweite Schleifstück (18) gegenüber dem Kohleschleifstück (17) eine höhere elektrische Leitfähigkeit aufweist.

3. Kontaktvorrichtung nach Anspruch 1 oder 2,
**dadurch gekennzeichnet,**
**dass** das zweite Schleifstück als Kupferschleifstück (18) ausgeführt ist.

4. Kontaktvorrichtung nach einem der vorangehenden Ansprüche,
**dadurch gekennzeichnet,**
**dass** das Schleifstückgestell (12) mit einem zweiten Kohleschleifstück (19) versehen ist, derart, dass das zweite Schleifstück (18) in Längsrichtung der Fahrleitung zwischen dem ersten und dem zweiten Kohleschleifstück (17, 19) angeordnet ist.

5. Kontaktvorrichtung nach einem der vorangehenden Ansprüche,
**dadurch gekennzeichnet,**
**dass** zwischen dem zweiten Schleifstück (18) und dem Schleifstückträger (13) eine Federeinrichtung angeordnet ist.

6. Kontaktvorrichtung nach einem der vorangehenden Ansprüche,
**dadurch gekennzeichnet,**
**dass** das zweite Schleifstück (18) mit einer Kontaktkrafteinstelleinrichtung versehen ist.

7. Kontaktvorrichtung nach Anspruch 6,
**dadurch gekennzeichnet,**
**dass** die Kontaktkrafteinstelleinrichtung eine fahrgeschwindigkeitsabhängige Betätigungseinrichtung aufweist.

8. Kontaktvorrichtung nach Anspruch 7,
**dadurch gekennzeichnet,**
**dass** die Betätigungseinrichtung eine aerodynamische Auftriebseinrichtung aufweist.

9. Kontaktvorrichtung nach einem der Ansprüche 4 bis 8,
**dadurch gekennzeichnet,**
**dass** das gemeinsam mit dem zweiten Schleifstück (18) auf dem Schleifstückträger (13) angeordnete erste Kohleschleifstück (17) und das zweite Kohleschleifstück (19) auf einem gegenüber einem unteren Gestellteil (21) des Stromabnehmers (10) mittels einer Federeinrichtung abgestützten oberen Gestellteil (22) des Stromabnehmers angeordnet sind, wobei das untere Gestellteil (21) mittels einer Schwenkachse (23) an eine höhenverstellbare Gestellbasis (11) des Stromabnehmers angeschlossen ist.

10. Kontaktvorrichtung nach einem der Ansprüche 4 bis 9,
**dadurch gekennzeichnet,**
**dass** das zweite Schleifstück (18) und das erste und das zweite Kohleschleifstück (17, 19) an eine in der Schwenkachse (23) an der Gestellbasis (11) ausgebildete zentrale Stromführungseinrichtung angeschlossen sind.

11. Stromabnehmer mit einer Kontaktvorrichtung nach einem oder mehreren der Ansprüche 1 bis 10.

## Claims

1. A contact device for a current collector for rail vehicles, wherein the contact device has at least one first carbon sliding piece (17) which is arranged for contact with an overhead wire on a sliding piece frame (12) movable against the overhead wire,
**characterized in that**
the first carbon sliding piece (17) together with a second sliding piece (18) is arranged on a sliding piece holder (13) which is connected to the sliding piece frame in an articulated manner, and is constructed as a double lever and is pivotable relative to the sliding piece frame about a pivot axis (14) transverse to the longitudinal direction of the overhead wire in such a manner that, in one operating configuration of the current collector, the first carbon sliding piece (17) and the second sliding piece (18), which are arranged on opposite sides of the pivot axis, are in contact with the overhead wire simultaneously and spaced apart from each other.

2. The contact device according to claim 1,
**characterized in that**
the second sliding piece (18) has a higher electrical conductivity than the carbon sliding piece (17).

3. The contact device according to claim 1 or 2,
**characterized in that**
the second sliding piece is realized as a copper sliding piece (18).

4. The contact device according to any of the preceding claims,
**characterized in that**
the sliding piece frame (12) is provided with a second carbon sliding piece (19) in such a manner that the second sliding piece (18) is arranged between the first and the second carbon sliding piece (17, 19) in the longitudinal direction of the overhead wire.

5. The contact device according to any of the preceding claims,
**characterized in that**
a spring device is arranged between the second sliding piece (18) and the sliding piece holder (13).

6. The contact device according to any of the preceding claims,
**characterized in that**
the second sliding piece (18) is provided with a contact force adjusting device.

7. The contact device according to claim 6,
**characterized in that**
the contact force adjusting device has a speed-dependent actuating device.

8. The contact device according to claim 7,
**characterized in that**
the actuating device has an aerodynamic lift device.

9. The contact device according to any of the claims 4 to 8,
**characterized in that**
the first carbon sliding piece (17), which is arranged on the sliding piece holder (13) together with the second sliding piece (18), and the second carbon sliding piece (19) are arranged on an upper frame portion (22) of the current collector, said upper frame portion being supported relative to a lower frame portion (21) of the current collector (10) by means of a spring device, the lower frame portion (21) being connected to a height-adjustable frame base (11) of the current collector via a pivot axis (23).

10. The contact device according to any of the claims 4 to 9,
**characterized in that**
the second sliding piece (18) and the first and the second carbon sliding piece (17, 19) are connected to a central current-conducting device formed in the pivot axis (23) at the frame base (11).

11. A current collector comprising a contact device according to any of the claims 1 to 10.

## Revendications

1. Dispositif de contact pour un collecteur de courant pour des véhicules ferroviaires, ledit dispositif de contact ayant au moins un premier frotteur en charbon (17) qui est disposé sur un châssis de frotteur (12) déplaçable contre la caténaire afin d'être contacté à une caténaire,
**caractérisé en ce que**
le premier frotteur en charbon (17), en combinaison avec un deuxième frotteur (18), est disposé sur un porteur de frotteur (13) qui est relié au châssis de frotteur dans une manière articulée, est conçu en tant que levier double et peut être pivoté par rapport au châssis de frotteur autour d'un axe de pivotement (14) transversal à la direction longitudinale de la caténaire de telle manière que, dans une configuration d'opération du collecteur de courant, le premier frotteur en charbon (17) et le deuxième frotteur (18), qui sont disposés aux côtés de l'axe de pivotement s'opposant, sont contactés avec la caténaire au même temps et sont espacés les uns aux autres.

2. Dispositif de contact selon la revendication 1,
**caractérisé en ce que**
le deuxième frotteur (18) a une conductivité électrique plus grande que le frotteur en charbon (17).

3. Dispositif de contact selon la revendication 1 ou 2,
**caractérisé en ce que**
le deuxième frotteur est réalisé en tant que frotteur en cuivre (18).

4. Dispositif de contact selon l'une quelconque des revendications précédentes,
**caractérisé en ce que**
le châssis de frotteur (12) est pourvu d'un deuxième frotteur en charbon (19) de telle manière que le deuxième frotteur (18) est disposé entre le premier et le deuxième frotteur en charbon (17, 19) dans la direction longitudinale de la caténaire.

5. Dispositif de contact selon l'une quelconque des revendications précédentes,
**caractérisé en ce qu'**
un dispositif de ressort est disposé entre le deuxième frotteur (18) et le porteur de frotteur (13).

6. Dispositif de contact selon l'une quelconque des revendications précédentes,
**caractérisé en ce que**
le deuxième frotteur (18) est pourvu d'un dispositif de réglage de force de contact.

7. Dispositif de contact selon la revendication 6,
**caractérisé en ce que**
le dispositif de réglage de force de contact a un dispositif d'actuation dépendent de la vitesse.

8. Dispositif de contact selon la revendication 7,
**caractérisé en ce que**
le dispositif d'actuation a un système de levage aérodynamique.

9. Dispositif de contact selon l'une quelconque des revendications 4 à 8,
**caractérisé en ce que**
le premier frotteur en charbon (17), qui est disposé sur le porteur de frotteur (13) en combinaison avec le deuxième frotteur (18), et le deuxième frotteur en charbon (19) sont disposés sur une partie de châssis (22) supérieure du collecteur de courant, ladite partie de châssis (22) supérieure étant supportée par rapport à une partie de châssis (21) inférieure du collecteur de courant (10) au moyen d'un dispositif de ressort, ladite partie de châssis (21) inférieure étant reliée à une base de châssis (11) réglable en hauteur du collecteur de courant par un axe de pivotement (23).

10. Dispositif de contact selon l'une quelconque des revendications 4 à 9,
**caractérisé en ce que**
le deuxième frotteur (18) et le premier et le deuxième frotteur en charbon (17, 19) sont reliés à un dispositif de conduction de courant central formé dans l'axe de pivotement (23) à la base de châssis (11).

11. Collecteur de courant comprenant un dispositif de contact selon l'une quelconque des revendications 1 à 10.
